# EUROPEAN PATENT APPLICATION

(11) **EP 2 468 592 A1**
(43) Date of publication of application: **27.06.2012**
(21) Application number: 11425258.8
(22) Date of filing: 21.10.2011
(51) Int. Cl.: B60T 7/10, B60T 7/16, B60T 13/74, B60T 17/22

(54) **Control electronic device for moto reducer with electronic release of the electrobrake**

(30) Priority: 28.10.2010 IT LT20100012
(71) Applicant: Anzalone Francesco, 04013 Latina Scalo (LT) (IT)
(72) Inventor: Anzalone, Francesco, 04013 Latina Scalo (IT); Cortesi, Luciano, 04010 Sermoneta (LT) (IT); Spelonca, Antonia, 00030 Montelanico (RM) (IT); Zecca, Antonio, 00045 Genzano di Roma (RM) (IT)

(57) **Abstract**

An electronic device (1) radio-receiver for moto reducers control, specifically moto reducer for rolling shutters.

This device allows the final user to electrically release the moto reducer's electrobrake of the motorized shutter via radio (through a radio control device) or through a simple switch.

The control electronic device, according to such discovery, by using an additional supply, for example a battery, enables, even in lack of electric grid supply, the excitement of the electrobrake's coil for a definite or indefinite time in order to allow its releasing and the shutter's manual handling.

## Description

The actual device has for main object an electronic radio-receiving device for moto reducers control, specifically moto reducers for rolling shutters.

The rolling shutters, counterbalanced by spring holder boxes of a common type, are activated through moto reducers that may be of a reversible or irreversible kind.

The motorizations of irreversible kind guarantee, in lack of supply to the moto reducer, the shutter's locking when manually handled with the aim of replacing the function of the shutter's lock. Normally the moto reducers for shutters of irreversible kind are equipped with an electrobrake which blocks the moto reducer's rotation when this one is not fed and, vice versa, releases it when activated. The above described situation has the disadvantage of demanding an additional mechanical release for the moto reducer to be activated in order to allow the manual handling of the shutter in lack of electric supply or in case of moto reducer's failure.

The present releasing systems of the electro brake are of a mechanical kind and are connected to the latter through a steel cable with its relevant sheath.

The most used on the market are unscrewing knobs (used from inside the shutter) and the control devices (selectors with releasing devices and armoured boxes) used for the electro brake's release from outside the shutter.

These last ones have some disadvantages:
Safety: they can be easily forced because they do not have any safety requirement.

Installation: it is very hard-working because you need to make holes on the walls and building works.

In this context, the technical duty being the object of such a discovery is to offer a solution which enables the user to release the shutter through an easy electronic control device bypassing the disadvantages of the common technique above mentioned.

More specifically, this discovery enables the final user to release the electro brake of the motorized shutter's moto reducer via radio (through a radio control device) or through a simple switch.

The electronic device, according to the actual discovery, can also include different functions, like the control of the moto reducer via radio, the management of safety devices (for example photocells), the flashing indicator supply, etc.

The control device, according to the actual discovery, by using an additional supply, for example a battery, enables, even in lack of the electrical grid supply, the excitement of the electrobrake's coil for a definite or indefinite time, in order to allow its release and the shutter's manual handling.

More specifically, in case there is no electrical grid supply, the device's management software, according to this discovery, automatically activates the electrobrake's release function through an additional supply, allowing the user to perform, when necessary, the release procedure (via radio or through a switch).

The radio release procedure can be the combination of the keys' pressure of the radio control device or the simple pressure of a single key.

The electrobrake's electronic release can occur in a direct way, by providing supply to the winding mechanism of the electrobrake, or in an indirect way, by giving supply to a supplementary equipment which then releases the electobrake.

The electrobrake's electronic release can be activated both in lack of the electric grid supply,or when a malfunction occurs (the final user needs to activate the release device and to lift the shutter manually).

The electrical release device of the electrobrake can be timed or stated:
if timed, once the electrobrake is activated, following a fixed or selectable period of time, it is automatically unlocked;
if stated, the electrobrake will be unlocked until a new control or a new condition is activated.

The state of electrobrake released can be reported to the user/fitter by means of optic and acoustic notices or by text messages. In this case, the device will utilize external or internal warnings.

In case of an external accumulator of electricity, the user/fitter can be warned of a low power level by means of optic and acoustic notices or by text messages.

The user/fitter can be warned of the scheduled maintenance date approaching by means of optic and acoustic notices or by text messages.

Thanks to this discovery, the technical task and purpose here specified can be easily reached by a device characterized by the technical features explained along the united claims.

By reading the general description of the moto reducer with electrobrake release realization, other features and advantages of such device will be clearer. As showed in the attached pictures:
- Pic 1 shows a schematic layout of an electrical device characterized by our discovery.

As showed in the attached illustration, in (1) the electrical device characterized by our discovery is illustrated.

The electrical device (1) is made up of a board (2) on which electrical components have been installed.

The terminal strip (3) connects the device to the network supply (phase, neutral and ground), the moto reducer (opening/common/closing), the flashlight and the electrobrake.

The terminal strip (4) connects the device to the security system (ex. photocells), to a control key and to the antenna.

The terminal strip (5) connects the device to the battery (6).

The device is composed by an electrical component characterized by the logic management of the device itself (7).

The electrical device needs a radio receiver (8) for its control via radio.

This device includes some switches (9) and some jumpers (10) for the software's functions programming like the radio control storage, the working times' management, etc.

The present device reaches the proposed goal surpassing the disadvantages complained in the common method. Thanks to an electronic device, apart from controlling the normal command's functions of the moto reducer, it is possible to release the electrobrake of the moto reducer by acting on a radio control device or on a switch.

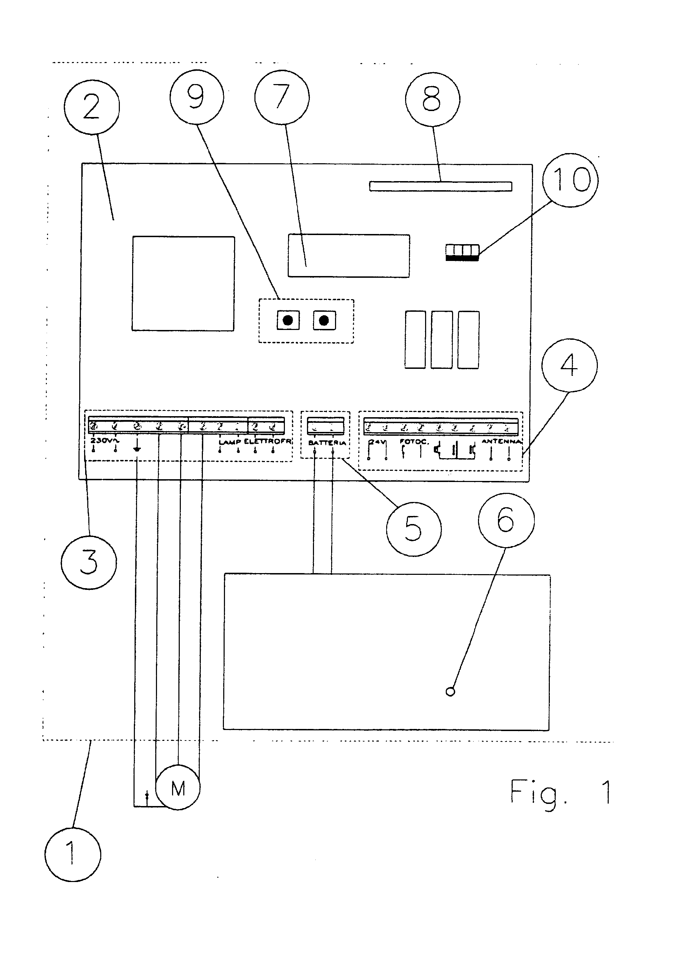

## Claims

1. Electrical device for motoreducer **characterized by** an electrical electrobrake release system. Such device makes it possible to electronically unlock the electrobrake of the motoreducer, especially for shutters, via radio (by means of the same or a different radio controller, by pressing one or more keys, one at a time or by following a pre-established sequence) or by pressing a single key that sends an easy or codified electrical control, as there is no electricity connection.
The electrobrake release can occur directly by giving power to the roller or indirectly by giving power to a secondary device that will subsequently unlock the electrobrake.
The electrobrake release can occur both if the principal power supply is missing or, in case of a principal power supply existence, if the user believes that the engine is not working good and he prefers a manual operation.
The electrobrake release device can be both timed or stated:
if timed, once the electrobrake is activated, following a period of time, fixed or selected, from the fitter/user, the same one locks itself in an automatic way again; if it is stated, the electrobrake remains released until the following command, or when a new condition demanded by the user comes.

2. The device, according to claim 1, provides for the notification of the release state to the user/fitter by means of optic and acoustic notices or by text messages, making use of external equipment or indicators inside the device itself.

3. The device, according to claim 2, in case an accumulator of electrical supply is used as a supplementary supply source, provides for the notification to the user/fitter by means of optic and acoustic notices or by text messages, of the achievement of a deficient energy level threshold.

4. The device, according to claim 3, provides for the notification to the user/fitter, by means of optic and acoustic notices or by text messages, of the management of the system's maintenance.
